# EUROPEAN PATENT APPLICATION

(11) **EP 1 035 079 A2**
(43) Date of publication of application: **13.09.2000**
(21) Application number: 00104652.3
(22) Date of filing: 03.03.2000
(51) Int. Cl.: C03B 33/04, C03B 33/033, B24B 9/10

(54) **Method and machine for producing contoured glass sheets**

(30) Priority: 05.03.1999 IT TO990168
(71) Applicant: BOTTERO S.p.A., 12010 Cuneo (IT)
(72) Inventor: Ghinamo, Paolo, 12012 Boves (IT); Margaria, Bruno, 12020 Villar San Costanzo (IT)
(74) Representative: Cerbaro, Elena, Dr.

(57) **Abstract**

A method and machine (1) for producing a contoured glass sheet (6), whereby a blank sheet of glass (7) is set to a reference position and then transferred to a single work station (8) where it is clamped onto a supporting table (12) and kept clamped to the table (12) throughout a cutting step to cut the sheet (7), a subsequent break-off step, and a final grinding step to grind the peripheral edges (9) of the semifinished part resulting from the break-off step.

## Description

The present invention relates to a method and machine for producing contoured glass sheets.

More specifically, the present invention relates to a method and machine for producing automotive windshields and windows, to which the following description refers purely by way of example.

As is known, automotive windshields and windows are produced on machines comprising a cutting device for cutting a blank sheet along a number of cutting lines; a break-off device for detaching the blank sheet along the cutting lines to obtain a contoured semifinished part; and a grinding device for grinding the edges and/or peripheral surfaces of the semifinished part to obtain the contoured sheet.

On most known machines, the above devices are located at respective separate work stations in turn located along the path of the sheets to be worked, and through which the blank sheets or the semifinished parts produced at the preceding stations are fed successively.

Other machines are known in which the cutting and break-off devices are located at one work station, and the grinding device at a separate station downstream from the first in the traveling direction of the sheets.

Though widely used, known machines of the above type have the drawback of involving, for each sheet to be worked, a first step to position, center and clamp the blank sheet at the cutting station, and at least a second step to position, center and clamp the semifinished part at another work station downstream from the cutting station. As such, known machines not only involve a considerable amount of downtime, but also fail to provide for a high degree of precision, particularly in terms of consistent quality of the finished product. That is to say, transferring and repositioning the semifinished parts at another station inevitably results in various errors, which are particularly noticeable at the edge grinding stage, the success of which depends on the peripheral edge of the detached semifinished part coinciding perfectly with the path of the grinding head.

Known machines of the above type are also expensive to produce and service - on account of each work station having to be equipped with its own sheet positioning and retaining assembly - and are fairly expensive to run, mainly on account, as is known, of wear of the grinding tools increasing in direct proportion to the deviation between the edge of the semifinished part and the path of the grinding tool. In many cases, therefore, the grinding wheels have a very short working life and must be changed frequently, thus further increasing the downtime of the machine.

It is an object of the present invention to provide a straightforward, low-cost method of producing contoured glass sheets, designed to eliminate the aforementioned drawbacks.

According to the present invention, there is provided a method of producing a contoured sheet of glass from a corresponding blank sheet of glass, the method comprising the steps of cutting said blank sheet along a number of cutting lines; breaking off the cut sheet along said cutting lines to obtain a semifinished part; and grinding at least part of the peripheral edges of said semifinished part to obtain the contoured sheet; and being characterized by comprising the steps of positioning said blank sheet at a single work station; clamping the blank sheet on supporting means located at said work station; and keeping said sheet at said work station until all said cutting, breaking-off and grinding steps have been completed.

The present invention also relates to a machine for producing contoured glass sheets.

According to the present invention, there is provided a machine for producing a contoured sheet of glass from a corresponding blank sheet of glass, the machine comprising cutting means for cutting said blank sheet along a number of cutting lines; break-off means for breaking off the cut sheet along said cutting lines to obtain a semifinished part; and grinding means for grinding at least part of the peripheral edges of said semifinished part to obtain the contoured sheet; and being characterized by also comprising a single work station housing said blank sheet; and supporting and clamping means located at said single work station to keep said blank sheet at said work station until said contoured sheet is completed.

A non-limiting embodiment of the invention will be described by way of example with reference to the accompanying drawings, in which:
Figure 1 shows a side view, with parts removed for clarity, of a preferred embodiment of a machine for producing contoured glass sheets in accordance with the present invention;
Figure 2 shows a lateral elevation of the Figure 1 machine;
Figure 3 shows, with parts removed for clarity, a section along line III-III in Figure 2;
Figure 4 shows a larger-scale section along line IV-IV in Figure 1;
Figure 5 shows a section along line V-V in Figure 4;
Figure 6 shows a larger-scale, partial schematic section along line VI-VI in Figure 1;
Figures 7, 8 and 9 show plan views of three different details of the Figure 1 machine.

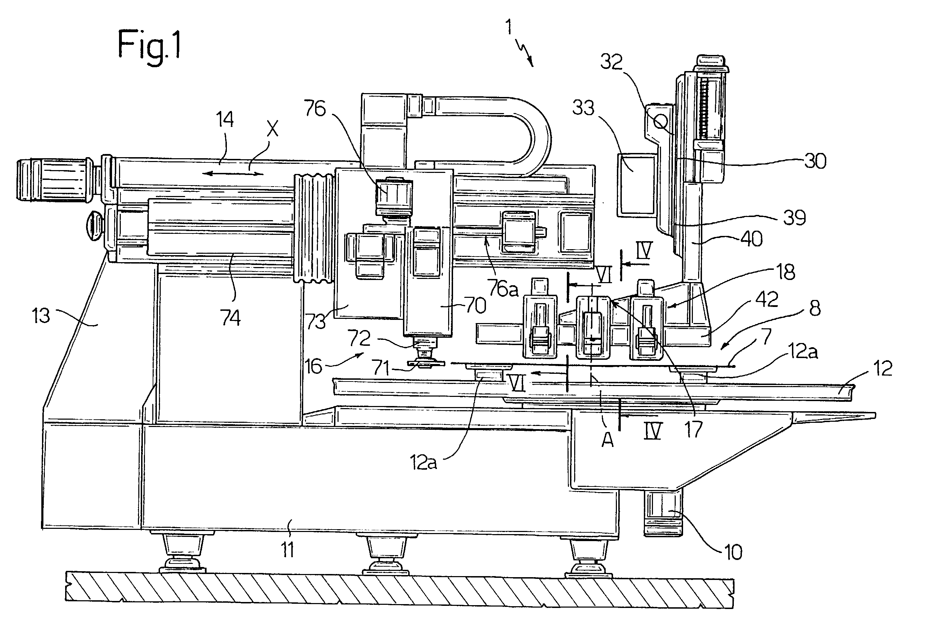

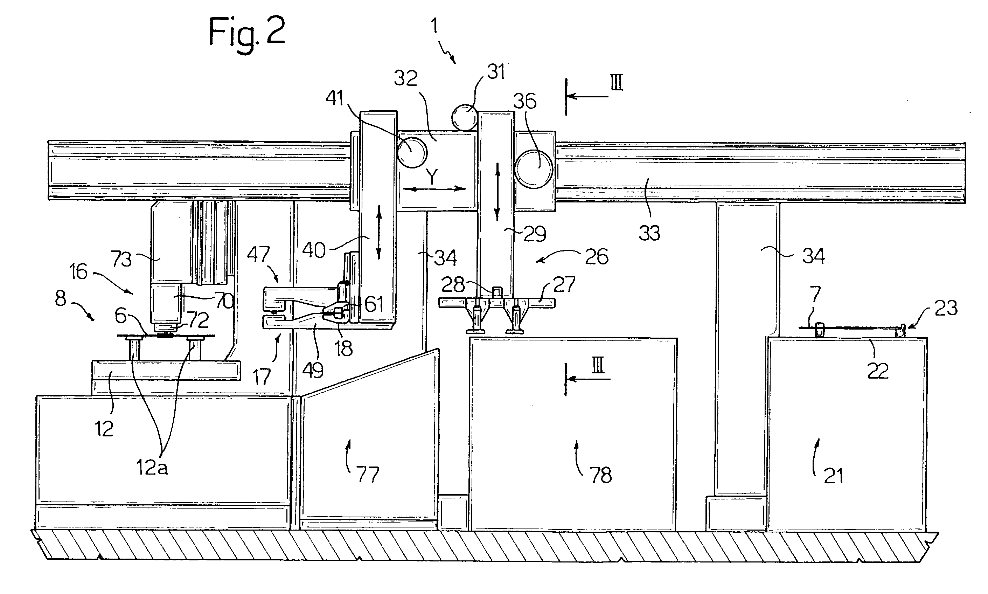

Number 1 in Figures 1 and 2 indicates as a whole a machine for producing a contoured sheet 6 of glass from a blank sheet of glass 7 (Figure 2).

Machine 1 comprises a base 11; and a single work station 8 for working sheet 7 and housing a table 12 for supporting and retaining work sheet 7. Table 12 is fitted to base 11 to rotate about a fixed, substantially vertical axis A perpendicular to sheet 7, is movable by means of a mechanical transmission (not shown) activated by a motor 10, and has a number of suction cups 12a extending upwards and cooperating directly with sheet 7.

As shown in Figure 1, machine 1 also comprises an upright 13 extending upwards from base 11; and a cross member 14 projecting from upright 13 in a direction X and supporting a movable grinding device 16 located at station 8 and of which table 12 forms part.

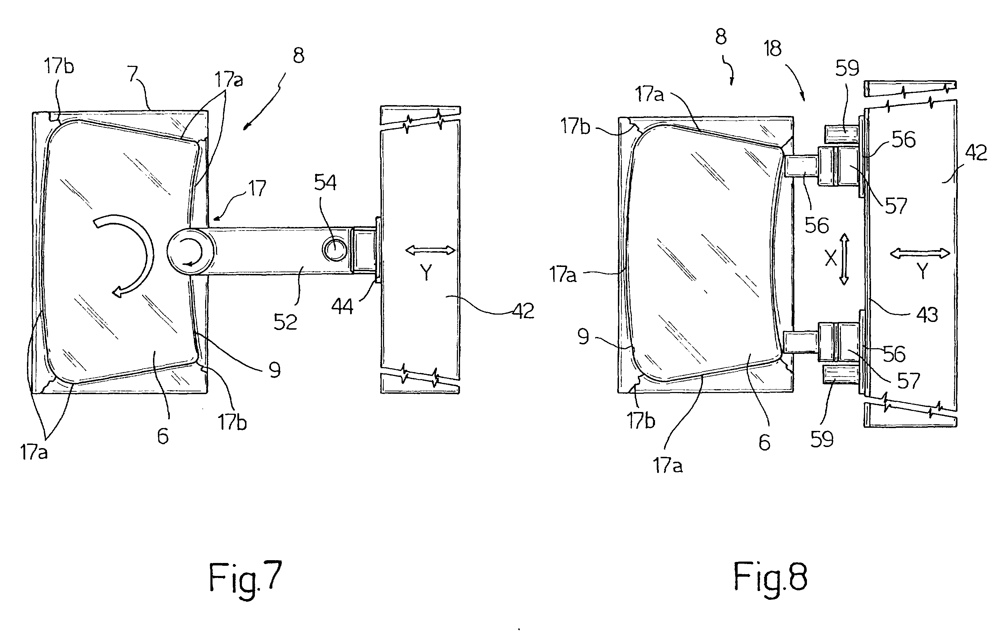

As shown in Figures 1 and 2, table 12 also forms part of a cutting device 17 and of a break-off device 18, both forming part of machine 1 and located at station 8 to respectively cut sheet 7 along a number of cutting lines 17a, 17b (Figures 7 and 8) and break off sheet 7 along cutting lines 17a, 17b.

Machine 1 also comprises a blank sheet 7 centering station 21 where blank sheet 7 is set to a predetermined reference position. More specifically, station 21 houses a table 22 connected integrally to base 11; and a known positioning assembly 23 for setting each sheet 7 to said reference position.

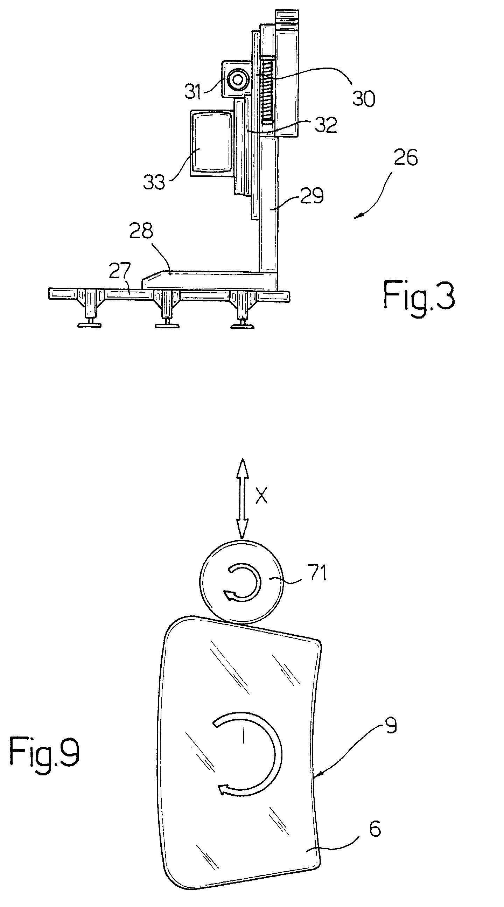

Sheet 7 centered at station 21 is transferred to station 8 by an overhead conveyor 26 (Figures 2 and 3) comprising a preferably suction cup-type gripping head 27 carried by an arm 28 fixed to a slide 29. Slide 29 is fitted to run along a vertical guide 30 (Figure 3), and is moved along guide 30 by a known assembly 31.

Guide 30 is carried by a carriage 32, which is moved along a respective straight, horizontal guide 33 by a known transmission activated by a motor 36. Guide 33 is connected integrally to base 11 by two fixed uprights 34, and extends perpendicularly to cross member 14 in a direction indicated Y in Figure 2.

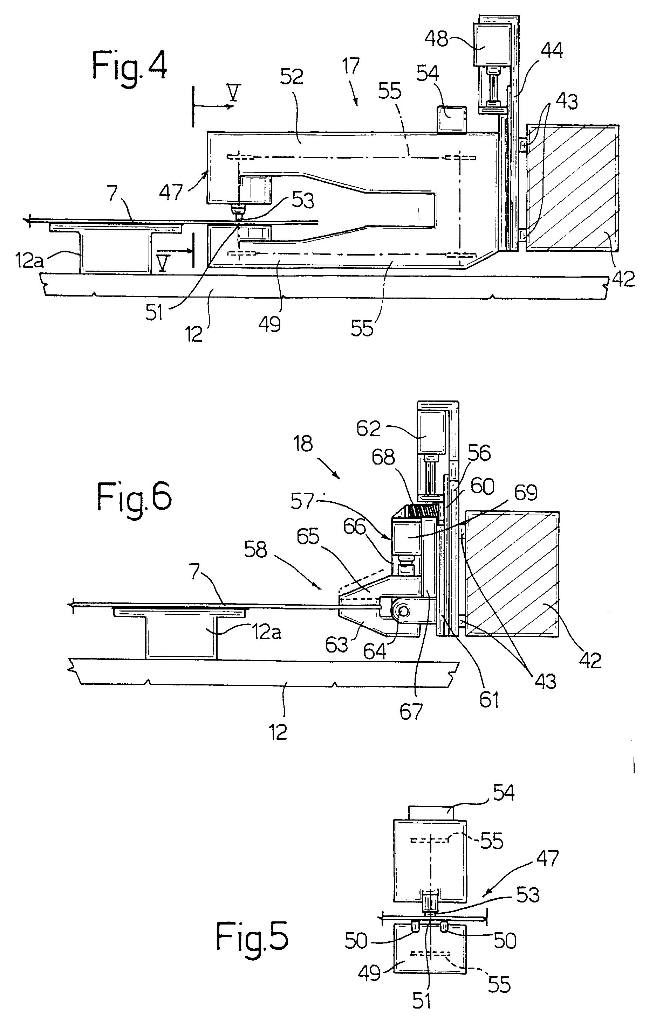

As shown in Figure 2, carriage 32 also carries a second vertical guide 39 (Figure 1) along which runs a second slide 40, which is moved along guide 39 by a respective transmission (not shown) activated by a respective motor 41. Slide 40 is fitted integrally with a horizontal arm 42 (Figures 1 and 4) supporting cutting device 17, which comprises a plate 44 connected integrally to arm 42, and a known cutting head 47. Head 47 is moved vertically with respect to plate 44 by a pneumatic cylinder 48 interposed between plate 44 and head 47.

As shown, particularly in Figure 4, head 47 is substantially U-shaped and open towards table 12 to permit insertion of a peripheral portion of sheet 7, and comprises a bottom arm 49 supporting a known cutting wheel 51. Wheel 51 rotates about a vertical axis and extends, in use, beneath sheet 7 to cut the bottom surface of sheet 7 along cutting lines 17.

Head 47 also comprises a top arm 52 supporting a contrast wheel 53 also rotating about a vertical axis; wheels 51 and 53 are rotated simultaneously by an electric motor 54 via a known transmission 55 shown schematically; and wheel 53 cooperates with two break-off rollers 50 carried by bottom arm 49 and extending on opposite sides of a vertical plane of wheel 51.

Arm 42 also supports break-off device 18, which, as shown particularly in Figure 8, comprises two slides 56 fitted to arm 42 to run parallel to direction X. Each slide 56 supports a respective gripping and break-off head 57 having a respective known gripper 58, and is moved along arm 42 by a respective motor 59.

As shown in Figure 6, each head 57 is supported by a respective slide 61, which is fitted to run along a respective vertical guide 60 carried by corresponding slide 56 and is moved along respective guide 60 by a respective pneumatic cylinder 62.

Each gripper 58 is hinged to respective slide 61 by a respective horizontal hinge pin 64 parallel to direction X, and comprises a bottom gripping element 63 pivoting on pin 64. Each gripper 58 also comprises a respective top gripping element 65 carried by a slide 66 movable vertically along a plate 67 also pivoting on pin 64, and is maintained in a rest position by a return spring 68. Each top gripping element 65 is movable to and from respective bottom element 63 by a respective pneumatic cylinder 69 to force a peripheral portion of sheet 7 against respective bottom element 63.

As shown in Figure 1, grinding device 16 comprises a known grinding wheel 71, which is selectable from a number of wheels, depending on the work to be performed, and is carried by a spindle 72 rotating about a vertical axis and forming part of an operating head 70. Head 70 is movable vertically on a powered carriage 73 fitted to run along a prismatic guide 74 carried by cross member 14 and extending parallel to direction X and perpendicular to guide 33.

Head 70 is moved vertically by a transmission (not shown) activated by a motor 76, while carriage 73 is moved by a known powered transmission 76a.

As shown in Figure 2, machine 1 also comprises an unloading station 77 for the waste material broken off sheet 7; and an unloading station 78 for unloading contoured sheet 6.

Machine 1 also comprises a known control unit (not shown) for controlling and synchronizing the movements of the various carriages and said guides, so as to guide both the cutting head and the grinding head along predetermined paths, and break off the cut sheet by means of a predetermined sequence of relative movements between the table and head, varying alongside a variation in said paths.

Operation of machine 1 will now be described as of the condition in which devices 16, 17 and 18 (Figures 1 and 2) are in respective rest positions at station 8; gripping head 27 is located at station 21; and positioning assembly 23 is maintained in a standby position ready to receive a work sheet 7.

As of the above condition, blank sheet 7 is fed in known manner to station 21 and set by assembly 23 to a predetermined reference position. Sheet 7 is then picked up by head 27, transferred to station 8, deposited onto table 12, and clamped firmly to table 12 by activating suction cups 12a. Cutting head 47 is then moved towards table 12 to insert a peripheral portion of sheet 7 between arms 49 and 52, and is set to a predetermined starting point of sheet 7; after which, wheel 51 is pushed against the bottom surface of sheet 7. Table 12 is then rotated about its own vertical axis, and, at the same time, carriage 32 is moved along respective guide 33 to cut along cutting lines 17a and 17b. Sheet 7 is then broken off firstly along cutting lines 17b by the opposing action of contrast roller 53 and pressure rollers 50, and then along lines 17a by device 18, the heads 57 of which engage the peripheral portions of sheet 7 defined by lines 17a and defining the waste material, and, each time, are set an optimum distance apart depending on the dimensions of the waste material to be broken off. After each break-off operation along respective line 17a, the waste material retained by heads 57 is fed to unloading station 77. Once the waste material has been removed, and with semifinished sheet 7 still connected to table 12, grinding wheel 71 is moved up to the peripheral edge 9 of sheet 7 and also set to said predetermined starting point, and edge 9 is ground by synchronizing the rotation of table 12 with the translation of carriage 73, so as to follow exactly the same path traveled when cutting along lines 17a. Once the grinding operation is completed, the finished sheet 6 is released by suction cups 12a and picked up and transferred by head 27 to station 78.

On machine 1 described, blank work sheet 7 is therefore positioned at one work station 8 and maintained in a fixed position at the one station throughout the formation of contoured sheet 6. As compared with known methods, performing the various operations at one work station, i.e. without moving the work sheet, provides above all for eliminating any possibility of error caused by transferring and repositioning the sheet, and, hence, for obtaining contoured sheets all of the same degree of dimensional and geometric precision and, hence, all of the same quality standard.

Moreover, eliminating transfer and repositioning of the sheet also provides for greatly reducing the cycle time by simply eliminating downtime.

Finally, as compared with known solutions, the presence of only one work station also provides for greatly simplifying the structure of the machine by eliminating a series of duplicated fixtures, and so reducing both production and maintenance costs.

Clearly, changes may be made to machine 1 as described herein without, however, departing from the scope of the present invention. For example, wheel 51 may be replaced by a different cutting tool, and likewise for break-off and grinding devices 17 and 18. In particular, break-off device 17 may be so selected and controlled as to break of sheet 7 simultaneously with or upon completion of each cut along cutting lines 17a, 17b.

## Claims

1. A method of producing a contoured sheet (6) of glass from a corresponding blank sheet (7) of glass, the method comprising the steps of cutting said blank sheet (7) along a number of cutting lines (17a, 17b); breaking off the cut sheet (7) along said cutting lines (17a, 17b) to obtain a semifinished part; and grinding at least part of the peripheral edges (9) of said semifinished part to obtain the contoured sheet (6); and being characterized by comprising the steps of positioning said blank sheet (7) at a single work station (8); clamping the blank sheet (7) on supporting means (12, 12a) located at said work station (8); and keeping said sheet (7) at said work station (8) until all said cutting, breaking-off and grinding steps have been completed.

2. A method as claimed in Claim 1, characterized by comprising the preliminary step of setting the blank sheet (7) to a given reference position before clamping the blank sheet at said single work station (8).

3. A method as claimed in Claim 2, characterized in that said preliminary step is performed at a positioning station (21) distinct from said single work station (8).

4. A method as claimed in one of Claims 1 to 4, characterized in that said blank sheet (7) is clamped at said work station (8) in a substantially horizontal position; and in that said cutting lines (17a, 17b) are cut on a downward-facing surface of the sheet (7).

5. A method as claimed in any one of the foregoing Claims, characterized in that at least one of said cutting and grinding steps comprises the operations of rotating said sheet (7) about a fixed axis (A) substantially perpendicular to the sheet (7), and moving a relative work tool (51)(71), in a straight direction (X)(Y) perpendicular to said fixed axis (A), to and from the fixed axis (A).

6. A method as claimed in Claim 5, characterized in that each of said cutting and grinding steps comprises a respective said rotation of the sheet (7), and a respective straight movement of the relative said work tool (51)(71).

7. A machine (1) for producing a contoured sheet (6) of glass from a corresponding blank sheet (7) of glass, the machine (1) comprising cutting means (17) for cutting said blank sheet (7) along a number of cutting lines (17a, 17b); break-off means (18) for breaking off the cut sheet along said cutting lines (17a, 17b) to obtain a semifinished part; and grinding means (16) for grinding at least part of the peripheral edges (9) of said semifinished part to obtain the contoured sheet (6); and being characterized by also comprising a single work station (8) housing said blank sheet (7); and supporting and clamping means (12, 12a) located at said single work station (8) to keep said blank sheet (7) at said work station (8) until said contoured sheet (6) is completed.

8. A machine as claimed in Claim 7, characterized by comprising a positioning station (21); and reference means (22, 23) located at said positioning station (21) to set said blank sheet (7) to a given reference position.

9. A machine as claimed in Claim 8, characterized in that said positioning station (21) is distinct from said single work station (8).

10. A machine as claimed in one of Claims 7 to 9, characterized in that said supporting and clamping means (12, 12a) keep said blank sheet (7) in a substantially horizontal position; and in that said cutting means (17) comprise a cutting tool (51) movable, in use, in contact with a downward-facing surface of the sheet (7).

11. A machine as claimed in any one of Claims 7 to 10, characterized in that said supporting and clamping means (12, 12a) comprise a single table (12) for supporting said sheet (7); and a clamping device (12a) for clamping said sheet (7) on said table (12); said table (12) rotating about a fixed axis (A) substantially perpendicular to the sheet (7); said cutting (17) and grinding (16) means comprising respective work tools (51)(71); and actuating means (32,40)(70,73) being provided to move at least one of said work tools (51)(71), in a straight direction perpendicular to said fixed axis (A), to and from the fixed axis (A).

12. A machine as claimed in Claim 11, characterized in that said actuating means comprise first (32,40) and second (70,73) actuating means for moving each of said work tools (51)(71) to and from said fixed axis (A).

13. A machine as claimed in Claim 11 or 12, characterized in that said table (12) is common to said cutting (17), break-off (18) and grinding (16) means.
